# EUROPÄISCHE PATENTANMELDUNG

(11) **EP 2 716 918 A2**
(43) Veröffentlichungstag der Anmeldung: **09.04.2014**
(21) Anmeldenummer: 13179540.3
(22) Anmeldetag: 07.08.2013
(51) Int. Cl.: F04D 29/58, H02K 9/26, H02K 11/00

(54) **Strömungsverdichtereinheit und Verwendung einer Strömungsverdichtereinheit**

(30) Priorität: 02.10.2012 DE 202012103771 U; 19.12.2012 DE 202012104971 U
(71) Anmelder: Fischer Abgastechnik GmbH & Co. KG, 48282 Emsdetten (DE)
(72) Erfinder: Fischer, Dirk, Dipl.-Ing., 48282 Emsdetten (DE); Eiling, Matthias, Dipl.-Ing., 48165 Münster (DE); Colakyeter, Isa, Dipl.-Ing., 48599 Gronau (DE)
(74) Vertreter: Werner & ten Brink

(57) **Zusammenfassung**

Die Erfindung ist eine Strömungsverdichtereinheit (10) und eine Verwendung einer Strömungsverdichtereinheit (10) als Luftversorgung für einen Vollstrombrenner zur Regeneration eines Rußpartikelfilters (48), wobei die Strömungsverdichtereinheit (10) einen Gasverdichter (14) sowie einen Elektromotor (18) zum Antrieb des Gasverdichters (14) und einen Inverter (34) zur Speisung des Elektromotors (18) umfasst und sich dadurch auszeichnet, dass ein Gehäuse (26, 28) mit integriertem Luftfilter (38) einen Strömungsweg für ein im Betrieb der Strömungsverdichtereinheit (10) mittels des Gasverdichters (14) angesaugtes Medium definiert und dass der Strömungsweg entlang einer Oberfläche des Inverters (34) und entlang der Außenoberfläche des Elektromotors (18) verläuft, so dass das angesaugte Medium zur Kühlung des Inverters (34) und zur anschließenden Kühlung des Elektromotors (18) wirksam ist.

## Beschreibung

Die Erfindung betrifft eine Strömungsverdichtereinheit sowie eine Verwendung einer Strömungsverdichtereinheit bei der Verbrennungsluftversorgung eines Brennersystems, insbesondere eines als Regenerationsbrenner zur Regeneration eines Rußpartikelfilters oder dergleichen fungierenden Brennersystems.

Bisher werden zur regelbaren Verbrennungsluftversorgung eines Regenerationsbrenners für mobil eingesetzte Rußpartikelfilter oder für ein aktives Thermomanagement Gasverdichter in Form sogenannter Schraubenverdichter, die auch unter dem Fachbegriff Roots-Gebläse bekannt sind, sowie Radialverdichter oder Kolbenverdichter verwendet, die jeweils mit (bürstenbehafteten) Gleichstrommotoren angetrieben werden, welche aus mobil mitgeführten Batterien mit elektrischer Energie (Gleichspannung) versorgt werden. Des Weiteren sind Gasverdichter in jeder Bauart, insbesondere sogenannte Seitenkanalverdichter, denkbar, die über eine Riemenscheibe oder dergleichen oder speziell zu fertigende, über Kupplungen verbundene Motoren angetrieben werden.

Bei einem über einen batteriegespeisten Gleichstrommotor angetriebenen Gasverdichter zur regelbaren Verbrennungsluftversorgung ergeben sich speziell bei geringen Drehzahlen ausgesprochen hohe elektrische Verluste. Der Wirkungsgrad einer solchen Vorrichtung ist also sehr gering.

Des Weiteren weisen die für den Hauptanwendungsfall einer stufenlos regelbaren Verbrennungsluftversorgung eines Regenerationsbrenners für mobil eingesetzte Rußpartikelfilter oder für ein aktives Thermomanagement nutzbaren Gasverdichter für Gleichspannung im Bereich von U_{dc}=9-30 V ein für die benötigte Leistung unpassendes Verhältnis der geförderten Luftmenge (Liefermenge) und der erreichten Druckerhöhung und/oder zu hohe Geräuschentwicklung und/oder eine zu geringe zu erwartende Standzeit und/oder eine fehlende Möglichkeit einer stufenlosen Regelbarkeit und/oder einen ungeeigneten Aufbau/eine ungeeignete Konstruktion auf (Roots-Gebläse, Radialverdichter und Kolbenverdichter jeweils mit Gleichstrommotoren).

Die im stationären Bereich eingesetzten Seitenkanalverdichter (SKV), die einphasig oder dreiphasig mit Wechselstrom bei U_{ac} =230/400 V betrieben werden, sind nicht mit alternativen Antriebsmotoren erhältlich. Zudem ist der Motor üblicherweise integraler Bestandteil des Seitenkanalverdichters und kann damit nicht einfach ausgetauscht werden.

Eine Aufgabe der Erfindung besteht darin, eine weitere Ausführungsform einer Strömungsverdichtereinheit anzugeben, insbesondere eine Ausführungsform einer Strömungsverdichtereinheit, welche die oben genannten Nachteile vermeidet oder zumindest reduziert.

Diese Aufgabe wird erfindungsgemäß mit einer Strömungsverdichtereinheit mit den Merkmalen des Anspruchs 1 gelöst. Danach ist bei einer Strömungsverdichtereinheit, die einen Gasverdichter sowie einen Elektromotor zum Antrieb des Gasverdichters und einen Inverter zur Speisung des Elektromotors umfasst, vorgesehen, dass der Elektromotor von einem Gehäuse, insbesondere einem an den Gasverdichter anschließenden Gehäuse, umgeben ist, dass das Gehäuse einen Strömungsweg für im Betrieb der Strömungsverdichtereinheit vom Gasverdichter angesaugte Umgebungsluft definiert und dass der Inverter so mit dem Gehäuse kombiniert ist, dass eine Oberfläche des Inverters als Begrenzungsfläche des Strömungswegs im Gehäuse fungiert.

Der Vorteil der Erfindung besteht vor allem darin, dass das beim Betrieb der Strömungsverdichtereinheit mittels des Gasverdichters eingesaugte Medium, das im Folgenden im Interesse einer besseren Lesbarkeit der hier vorgelegten Beschreibung, aber ohne Verzicht auf einer weitergehende Allgemeingültigkeit als Umgebungsluft bezeichnet wird, zur Kühlung (Entwärmung) des Inverters verwendet wird. Die Kühlung erfolgt, weil eine Oberfläche des Inverters als Begrenzungsfläche des Strömungswegs im Gehäuse der Strömungsverdichtereinheit fungiert. Die angesaugte Umgebungsluft streicht damit entlang dieser Oberfläche des Inverters und bewirkt damit dessen Entwärmung. Eine separate Kühlung des Inverters ist damit nicht notwendig. Darüber hinaus findet die Kühlung des Inverters zwangsläufig beim Betrieb der Strömungsverdichtereinheit statt, so dass nicht nur eine separate Kühlung des Inverters nicht mehr benötigt wird, sondern auch eine zur Aktivierung einer solchen separaten Kühlung notwendige Ansteuerschaltung nicht benötigt wird.

Die Kühlung des Inverters ist besonders effizient, wenn sich auf der im Strömungsweg befindlichen Oberfläche ein Kühlkörper mit einer in üblicher Art und Weise strukturierten Oberfläche, also zum Beispiel einer Oberfläche mit einer Vielzahl von Kühlrippen, befindet. Ein solcher Kühlkörper erhöht die bei der Entwärmung wirksame Oberfläche.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Weil die Gegenstände der Unteransprüche im Hinblick auf den Stand der Technik am Prioritätstag eigene und unabhängige Erfindungen bilden können, behält die Anmelderin sich vor, sie zum Gegenstand unabhängiger Ansprüche oder Teilungserklärungen zu machen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist. Schließlich ist darauf hinzuweisen, dass das hier angegebene Verfahren auch entsprechend der abhängigen Vorrichtungsansprüche weitergebildet sein kann und umgekehrt.

Bei einer Ausführungsform der Strömungsverdichtereinheit umfasst das Gehäuse ein Gehäuseaußenteil und ein im Innern des Gehäuseaußenteils befindliches Gehäuseinnenteil. Das Volumen zwischen dem Gehäuseaußenteil und dem Gehäuseinnenteil definiert den oben erwähnten Strömungsweg für die im Betrieb der Strömungsverdichtereinheit vom Gasverdichter angesaugte Umgebungsluft. Bei dieser Ausführungsform der Strömungsverdichtereinheit weist das Gehäuseaußenteil eine Öffnung zum Einsetzen des Inverters in das Gehäuseaußenteil auf. Eine Oberfläche eines auf diese Öffnung gesetzten Inverters fungiert als Begrenzungsfläche des Strömungswegs der Umgebungsluft zwischen dem Gehäuseaußenteil und dem Gehäuseinnenteil, so dass sich im Betrieb der Strömungsverdichtereinheit wieder die oben bereits beschriebene Entwärmung des Inverters ergibt.

Wenn das Gehäuseaußenteil in Bezug auf das Gehäuseinnenteil exzentrisch angeordnet ist, so dass eine Innenoberfläche des Gehäuseaußenteils abschnittsweise eine Außenoberfläche des Gehäuseinnenteils berührt oder näherungsweise berührt, bewirkt die exzentrische Anordnung eine Sperrung des Strömungswegs in einer für die Luftströmung nicht gewünschten Richtung um das Gehäuseinnenteil. Der Ausdruck "exzentrisch" meint dabei dass die Flächenschwerpunkte einer Schnittkontur des Gehäuseaußenteils und des Gehäuseinnenteils nicht zusammenfallen. Die exzentrische Anordnung der beiden Gehäuseteile und die nur abschnittsweise Berührung oder näherungsweise Berührung der beiden Gehäuseteile lässt also in dem Volumen zwischen Gehäuseaußenteil und Gehäuseinnenteil zwischen einem Einlass in dieses Volumen und einem Auslass aus diesem Volumen genau einen Weg um das Gehäuseinnenteil zu und definiert damit eine eindeutige Strömungsrichtung. Die beschriebene exzentrische Anordnung des Gehäuseaußenteils in Bezug auf das Gehäuseinnenteil ist ein Mittel zur Festlegung einer solchen eindeutigen Strömungsrichtung. Alternativ käme ein als Sperre wirkendes Blech oder dergleichen in Betracht, das zwischen Gehäuseaußenteil und Gehäuseinnenteil angebracht wird. Dies wäre allerdings ein zusätzliches Bauteil, das zudem noch separat anzubringen wäre.

Wenn das Gehäuseaußenteil so geformt ist, dass sich im Volumen zwischen Gehäuseaußenteil und Gehäuseinnenteil im Bereich der als Begrenzungsfläche des Strömungswegs fungierenden Oberfläche des Inverters eine Einschnürung ergibt, ist gewährleistet, dass nahezu die gesamte über diesen Weg angesaugte Luftmenge über die Oberfläche des Inverters oder über die Oberfläche eines am Inverter angebrachten Kühlkörpers und durch die Kühlrippen des Kühlkörpers streicht, so dass hierdurch und durch die aufgrund der einschnürungsbedingten Beschleunigung erhöhten Kühlwirkung des Luftstroms die angestrebte Entwärmung des Inverters in besonders hohem Maße gelingt.

Wenn das Gehäuseinnenteil an axial gegenüberliegenden Enden des Gehäuseinnenteil, also am unteren und am oberen Rand des Gehäuseinnenteils, zwei im Folgenden zur Unterscheidung als erstes und ein zweites Fenster bezeichnete Öffnungen aufweist, kann die im Betrieb der Strömungsverdichtereinheit angesaugte Umgebungsluft durch eines der Fenster aus dem Zwischenraum zwischen Gehäuseaußenteil und Gehäuseinnenteil in das Gehäuseinnenteil eintreten und durch das andere Fenster wieder aus dem Gehäuseinnenteil austreten. Weil das Gehäuseinnenteil den Elektromotor der Strömungsverdichtereinheit umgibt, ist die angesaugte Umgebungsluft dann auch zur Kühlung (Entwärmung) des Elektromotors wirksam.

Bei einer weiteren Ausführungsform der Strömungsverdichtereinheit verbleibt an einer Unterkante des Gehäuseinnenteils ein umlaufender, offener Spalt, der das Volumen zwischen dem Gehäuseaußenteil und dem Gehäuseinnenteil an das Volumen im Gehäuseinnenteil koppelt. Auf diese Weise wird erreicht, dass die angesaugte Umgebungsluft entlang der kompletten oder zumindest im Wesentlichen entlang der kompletten Umfangslinie des Gehäuseinnenteils in dieses einströmen kann. Der im Gehäuseinnenteil befindliche Motor wird dann allseitig oder im Wesentlichen allseitig von der angesaugten Umgebungsluft umströmt, so dass eine gleichmäßige Entwärmung resultiert. Die lichte Weite des an der Unterkante des Gehäuseinnenteils verbleibenden Spalts ist dabei so gewählt, dass eine wesentliche Menge des Luftstroms die Oberfläche des Inverters passiert. Dabei strömen ca. 10-20% des der gesamten angesaugten Luftmenge über diesen Spalt direkt in das Volumen zwischen Elektromotor und Gehäuseinnenteil und zwar maßgeblich in dem Abschnitt, der dem Luftfilter am nächsten und dem ersten Fenster gegenüberliegt. Die restliche Luftmenge strömt entlang des Inverters und schließlich durch das erste Fenster in das Gehäuseinnenteil und gelangt damit ebenfalls zum Elektromotor. Dies ergibt eine möglichst gleichmäßige Umströmung des Elektromotors.

Bei einer speziellen Ausführungsform der Strömungsverdichtereinheit ist das Innenvolumen des Gehäuseinnenteils auf eine Hüllkontur des Elektromotors abgestimmt. Das Gehäuseinnenteil nimmt dann den Elektromotor im Wesentlichen formschlüssig auf. Dies gewährleistet, dass die angesaugte und durch das Gehäuseinnenteil strömende Umgebungsluft im Wesentlichen zwischen den Kühlrippen des Elektromotors strömt und damit in besonders effizienter Art und Weise zur Kühlung des Elektromotors wirksam ist.

Wenn das Gehäuseaußenteil eine Öffnung zum Einsetzen eines Luftfilters in das Gehäuseaußenteil aufweist, wird die eingesaugte Umgebungsluft vor dem Eintritt in das Gehäuse der Strömungsverdichtereinheit mittels des Luftfilters von Staub, Schwebstoffen und dergleichen befreit. Solche Partikel gelangen ohne einen derartigen Luftfilter in das Innere des Gehäuses der Strömungsverdichtereinheit und werden mit dem Luftstrom weitergetragen. Dies ist im Hinblick auf einen in Strömungsrichtung am Ende eines mit der Strömungsverdichtereinheit gebildeten Gesamtsystems, also der Strömungsverdichtereinheit nachgeschaltet, befindlichen Rußpartikelfilter mit geschlossener Struktur zu vermeiden. Des Weiteren würden angelagerte Schmutzpartikel die Funktion von Sensoren und Aktoren im Luftstrom beeinträchtigen. Schließlich wäre auch die Reinigung der Strömungsverdichtereinheit aufwendig, weil dafür eine weitgehende Demontage der Strömungsverdichtereinheit notwendig ist. Wenn am Gehäuseaußenteil ein Luftfilter angebracht wird, wird nicht nur eine sonst regelmäßig erforderliche Reinigung nicht notwendig. Vielmehr wird auch die mit der angesaugten Umgebungsluft bewirkte Kühlung des Inverters und/oder des Elektromotors auf einem konstanten Niveau gehalten. Die von dem Luftfilter zurückgehaltenen Partikel würden sich sonst nämlich auf der Oberfläche des Inverters oder der Oberfläche von dessen Kühlkörper und der Oberfläche des Elektromotors niederschlagen und damit die wirksame Entwärmung behindern.

Wenn der in das Gehäuseaußenteil eingesetzte Luftfilter mit einer Luftfilterhaube abgedeckt ist, ist der Luftfilter mechanisch geschützt und es erhöht sich die Verwendungsdauer des Luftfilters in rauen Umgebungen, also Umgebungen, in denen mit Spritzwasser oder dergleichen zu rechnen ist. Die Luftfilterhaube verhindert, dass solche Verunreinigungen die Standzeit des Luftfilters reduzieren oder gar dessen schlagartige Zerstörung zur Folge haben. Die den Luftfilter abdeckende Luftfilterhaube ist damit und insbesondere auch durch ihre spezielle Formgebung, nämlich die vollflächige frontseitige Abdeckung der angeströmten Oberfläche des Luftfilters und die zumindest teilweise über den den Luftfilter aufnehmenden Rahmen hinausreichenden Kanten, als Spritzschutz für den Luftfilter wirksam.

Der Vorteil der Erfindung und ihrer Ausgestaltungen besteht damit insbesondere darin, dass der Gasverdichter, insbesondere ein Gasverdichter in Form eines Seitenkanalverdichters, durch einen Dreiphasen-Asynchronmotor angetrieben wird, der über einen Wechselrichter / Inverter angesteuert wird, welcher wiederum mit einer Gleichspannung im Bereich von 9-30 V Gleichspannung versorgt wird. Der Dreiphasen-Asynchronmotor weist dafür Wicklungen für 6-20 V Wechselspannung auf und ist speziell für diese Spannungsbereiche angefertigt. Die spezielle Anfertigung bezieht sich dabei auf eine auf die Spannungsverhältnisse und die zu erreichenden Rotationsgeschwindigkeiten und Drehmomente abgestimmte Wicklung.

Insgesamt ist damit eine energieeffiziente Förderung eines gasförmigen Mediums bei gleichzeitiger Druckerhöhung in Anwendungsbereichen möglich, bei denen zur Energieversorgung für eben jene Förderung/Druckerhöhung ein Gleichstromnetz mit Spannungen im Bereich von 9-30 V Gleichspannung genutzt wird. Derartige Gleichstromnetze sind speziell bei mobilen Anwendungen mit als Antrieb fungierenden Verbrennungsmotoren vorhanden. Als Beispiel können hier mobile Arbeitsmaschinen und Fahrzeuge mit Bordnetzen mit Spannungen von 12 V Gleichspannung oder 24 V Gleichspannung genannt werden, also kleinere, mobile Arbeitsmaschinen (12 oder 24 V Gleichspannung), sowie Personenkraftwagen (12 V Gleichspannung) und Lastkraftwagen (24 V Gleichspannung).

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung auch Abänderungen und Modifikationen möglich, insbesondere solche Varianten, die durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten führen.

Es zeigen
- Figur 1: eine isometrische Ansicht der erfindungsgemäßen Strömungsverdichtereinheit,
- Figur 2: eine Explosionsdarstellung der Strömungsverdichtereinheit aus Figur 1,
- Figur 3: eine Übersichtsdarstellung mit einzelnen von der Strömungsverdichtereinheit umfassten Funktionseinheiten,
- Figur 4: ein Anwendungsszenario einer Strömungsverdichtereinheit aus Figur 1 und
- Figur 5: bis
- Figur 9: teilweise geschnittene isometrische Ansichten der Strömungsverdichtereinheit aus Figur 1.

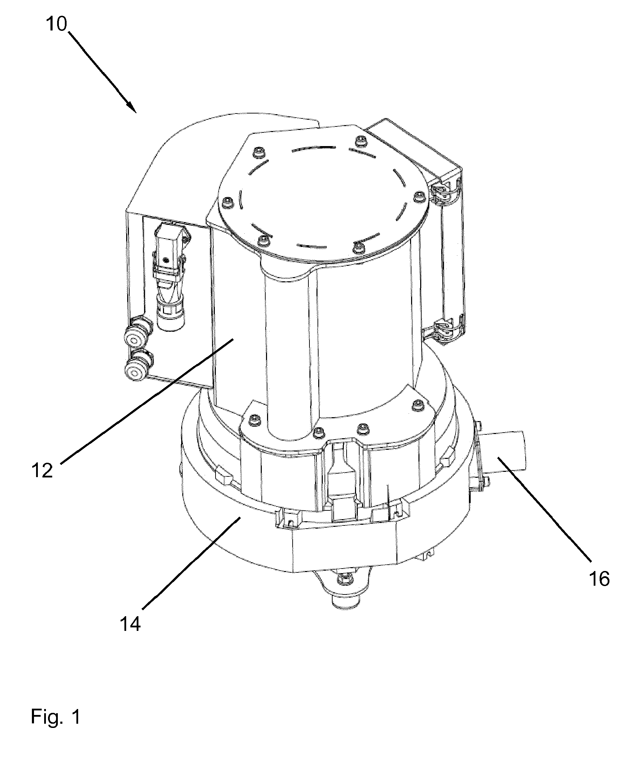

Die Darstellung in Figur 1 zeigt eine isometrische Ansicht einer Ausführungsform einer erfindungsgemäßen Strömungsverdichtereinheit 10, die im Folgenden mitunter auch nur kurz also Strömungsverdichter bezeichnet wird. Die Strömungsverdichtereinheit 10 umfasst einen Antriebsteil 12 und einen Gasverdichter 14. Bei dem Gasverdichter 14 handelt es sich zum Beispiel um einen ein- oder zweistufigen Seitenkanalverdichter. In der Darstellung in Figur 1 ist im rechten Bereich im Anschluss an den Gasverdichter 14 ein Luftanschlußstutzen 16 gezeigt, der als Ausgang des Gasverdichters 14 und als Ausgang der Strömungsverdichtereinheit 10 insgesamt fungiert.

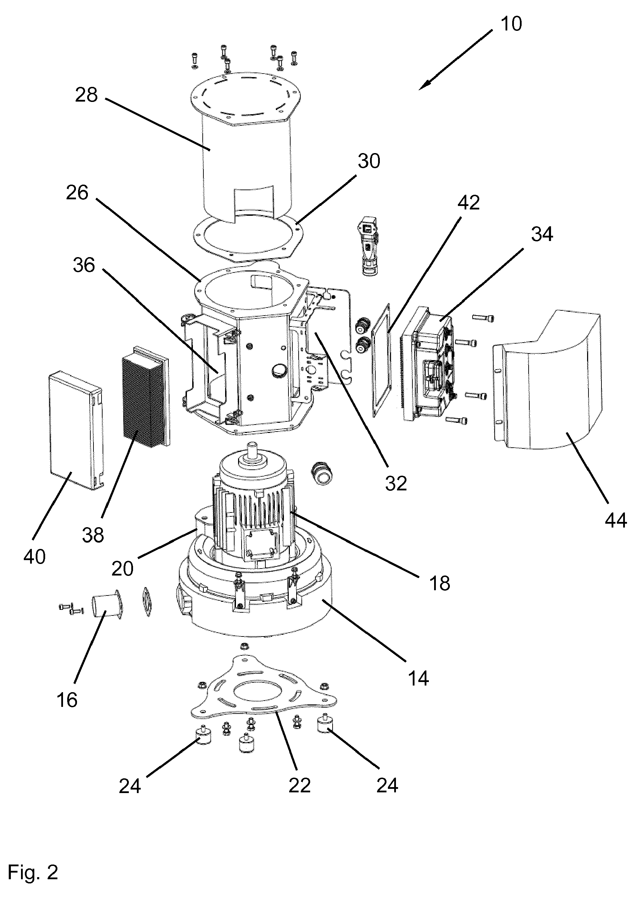

Die Darstellung in Figur 2 zeigt die Strömungsverdichtereinheit 10 aus Figur 1 in einer Explosionsdarstellung. Danach umfasst die Strömungsverdichtereinheit 10 zum Antrieb des Gasverdichters 14 einen Elektromotor 18. Der Elektromotor 18 ist in Bezug auf den Gasverdichter 14 so angeordnet, dass eine Welle des Elektromotors 18 (Motorwelle) und eine Welle des Gasverdichters 14 (Verdichterwelle) entlang einer Achse liegen, so dass der Gasverdichter 14 direkt durch die Motorwelle antreibbar ist. In der Darstellung in Figur 2 ist der Elektromotor 18 bereits so am Gasverdichter 14 angebracht, dass Motorwelle und Verdichterwelle miteinander gekoppelt sind. Links neben dem Elektromotor 18 befindet sich bei der für die Darstellung in Figur 2 verwendeten Blickrichtung ein Luftansaugstutzen 20 mit einer darin gebildeten Ansaugöffnung des Gasverdichters 14. Unterhalb des Gasverdichters 14 ist ein optionaler Fußständer 22 der Strömungsverdichtereinheit 10 mit ebenfalls optionalen Schwingungsdämpfern 24 gezeigt.

Zur Aufnahme des Elektromotors 18 ist ein zweiteiliges Gehäuse vorgesehen. Das Gehäuse umfasst ein Gehäuseaußenteil 26 und ein Gehäuseinnenteil 28. Das Gehäuseinnenteil 28 umschließt den Elektromotor 18 in radialer Richtung und auf dessen Oberseite und das Gehäuseinnenteil 28 wird in radialer Richtung seinerseits vom Gehäuseaußenteil 26 umschlossen. Zur Anbringung zwischen dem Gehäuseinnenteil 28 und dem Gehäuseaußenteil 26, nämlich auf einer oberen Dichtungsfläche des Gehäuseaußenteils 26, ist eine Dichtung 30 vorgesehen.

Das Gehäuseaußenteil 26 umfasst eine erste Öffnung 32 für einen Inverter 34 und eine zweite Öffnung 36 für ein Luftfilter 38. Die zweite Öffnung 36 fungiert als Ansaugöffnung der Strömungsverdichtereinheit 10. Zur Abdeckung des in der zweiten Öffnung 36 angebrachten Luftfilters 38 ist eine Luftfilterhaube 40 vorgesehen. Der Inverter 34 ist in an sich bekannter Art und Weise zur Ansteuerung des Elektromotors 18 vorgesehen und umfasst Leistungshalbleiterschalter, insbesondere Leistungshalbleiterschalter in Form sogenannter IGBTs, die im Betrieb der Strömungsverdichtereinheit 10 Wärme erzeugen und daher einer Kühlung bedürfen. Darüber hinaus umfasst der Inverter auch eine Ansteuerschaltung zur Ansteuerung der Leistungshalbleiterschalter. Der Inverter 34 ist unter Zwischenlegung einer grundsätzlich optionalen Dichtung 42 am Gehäuseaußenteil 26 in der dortigen ersten Öffnung 32 anbringbar. Der Inverter 34 wird im angebrachten Zustand durch eine Inverterabdeckhaube 44 abgedeckt.

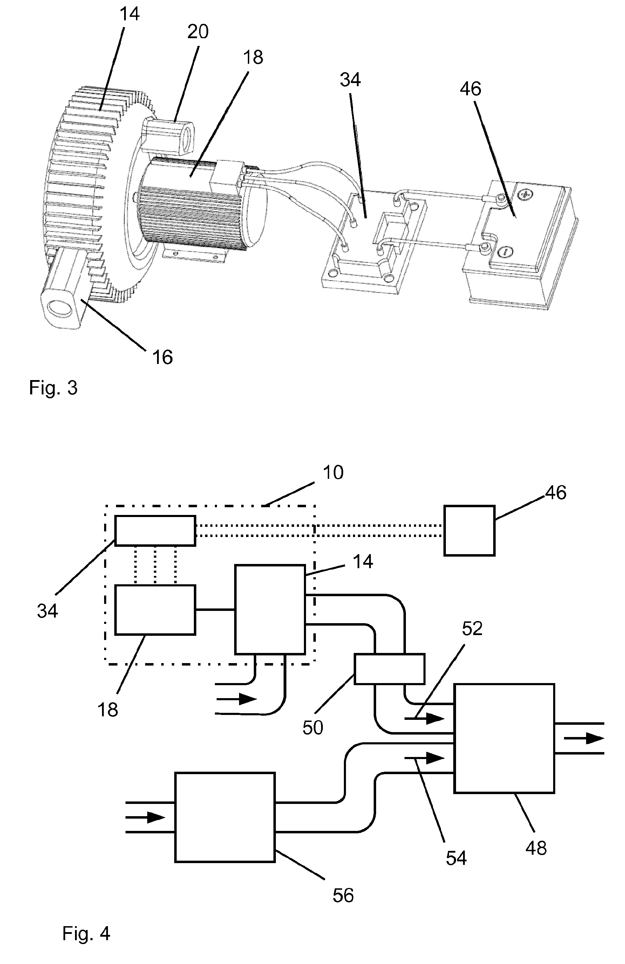

Die Darstellung in Figur 3 zeigt die auf einzelne wenige Funktionselemente reduzierte Strömungsverdichtereinheit 10 gemäß Figur 1. Dargestellt sind der Gasverdichter 14, der Elektromotor 18, der Inverter 34 und eine elektrische Energiequelle 46, insbesondere in Form einer Gleichspannungsquelle, die hier als Batterie gezeigt ist. Erkennbar ist die in Bezug auf den Gasverdichter 14 axiale Anordnung des Elektromotors 18. Hier ist sogar zum Teil die in den Gasverdichter 14 eintretende Motorwelle erkennbar, die innerhalb des Gasverdichters 14 drehfest mit einer Welle des Gasverdichters kombiniert ist, zum Beispiel indem die Welle des Gasverdichters in einer Hülse endet, in welche die Motorwelle einführbar ist. Bei einer derartigen Ausführungsform der Strömungsverdichtereinheit 10 treibt der Elektromotor 18 den Gasverdichter 14 direkt an und beeinflusst unmittelbar dessen Drehgeschwindigkeit. Eine solche Ausführung der Strömungsverdichtereinheit 10 ist damit getriebelos. Dies bedeutet eine noch weitere Reduktion des Wartungsaufwands, eine Geräuschreduzierung und eine ebenfalls reduzierte Ausfallwahrscheinlichkeit. Am Gasverdichter 14 ist parallel zur Rotationsachse des Elektromotors 18 der als Ansaugöffnung oder Lufteinlass fungierende Luftansaugstutzen 20 gezeigt. Des Weiteren ist in radialer Orientierung der als Ausgang des Gasverdichters 14 fungierende Luftanschlußstutzen 16 erkennbar.

Bei dem Gasverdichter 14 handelt es sich zum Beispiel um einen handelsüblichen Seitenkanalverdichter, insbesondere einen zwei- oder mehrstufigen Seitenkanalverdichter. Andere Verdichterbauarten sind ebenfalls möglich. Bei dem Elektromotor 18 handelt es sich zum Beispiel um einen Kleinspannungs-Asynchronmotor. Speziell kommt als Elektromotor 18 ein handelsüblicher Dreiphasen-Asynchronmotor in Betracht, der zunächst Ständerwicklungen für U_{ac}=230 V aufweist und bei dem die Ständerwicklungen für den oben genannten Spannungsbereich, also insbesondere U_{ac}=6-20 V oder U_{ac}=9-20 V oder U_{ac}=16-20 V, angepasst wurden (U_{ac} : Wechselpannung; U_{dc}: Gleichspannung). Eine solche Anpassung erfolgt, indem bei dem Elektromotor 18 die bisherigen Ständerwicklungen entfernt und neue, auf den genannten Spannungsbereich abgestimmte Ständerwicklungen angebracht werden.

Der Elektromotor 18 wird über den Inverter 34 aus der jeweiligen elektrischen Energiequelle 46 mit elektrischer Energie versorgt. Die elektrische Energiequelle 46 wird zum Beispiel von einem Fahrzeug (PKW oder LKW) oder einer mobilen Arbeitsmaschine mitgeführt. Speziell wenn als elektrische Energiequelle 46 eine Gleichspannungsquelle, insbesondere in Form einer Batterie oder dergleichen, verwendet wird, sind solche Gleichspannungsquellen oder Batterien von dem Fahrzeug oder der Arbeitsmaschine umfasst, um in an sich bekannter Art und Weise einen dortigen Verbrennungsmotor zu starten. Auf eine solche Energiequelle 46 kann also zum Antrieb der hier beschriebenen Strömungsverdichtereinheit 10 zurückgegriffen werden, so dass keine separate Energiequelle erforderlich ist oder zumindest nicht notwendig eine separate Energiequelle erforderlich ist.

Eine von dem Inverter 34 umfasste Inverterschaltung ist grundsätzlich an sich bekannt und daher nicht näher dargestellt. Die Inverterschaltung ist für eine Eingangsspannung im Bereich von U_{dc}= 9-30 V und zur Erzeugung einer Ausgangsspannung von zum Beispiel U_{ac} 6-20 V bei Frequenzen von 0-300 Hz ausgelegt. Durch eine geeignete Ansteuerung des Inverters 34 lässt sich eine Frequenz einer auf der Ausgangsseite des Inverters 34 abgegebenen Wechselspannung einstellen und damit eine Drehzahl des Elektromotors 18 vorgeben. Die Drehzahl des Elektromotors 18 bestimmt dann die Menge des mittels der Strömungsverdichtereinheit 10 geförderten gasförmigen Mediums und die innerhalb der Strömungsverdichtereinheit 10 erreichte Druckerhöhung.

Die Ansteuerung des Inverters 34, also speziell die Ansteuerung der von der Inverterschaltung umfassten Leistungshalbleiter, erfolgt mittels einer analog oder über einen Bus, insbesondere einen Bus in einer Ausführungsform als CAN-Bus, angesteuerten Ansteuerschaltung. Eine solche Ansteuerung kann dabei mittels einer übergeordneten Steuerung/Steuerungseinrichtung erfolgen.

Als Vorteile dieser Bauart und damit auch als Vorteile der Strömungsverdichtereinheit 10 ergeben sich insbesondere eine Limitierung der mechanischen Lebensdauer nahezu ausschließlich durch die Wälzlager im Gasverdichter 14 und im Elektromotor 18 und damit eine ausgesprochen hohe Langlebigkeit, eine robuste Bauweise aufgrund erprobter Hauptkomponenten, eine Möglichkeit zur Nutzung kostengünstiger Komponenten (Gasverdichter 14, 230 V Dreiphasen-Asynchronmotor 18, Inverter 34) aus großen Serien, eine hohe Dynamik der geförderten Gasmengen (Liefermengenregelung), ein hoher Wirkungsgrad des Elektromotors 18 bei optimierter Ansteuerung durch den Inverter 34 sowie eine Möglichkeit zur Vernetzung des Inverters 34 mit anderen Steuerungen, zum Beispiel bei einer Ansteuerung über einen Bus, und dadurch eine gute Möglichkeit zur Überwachung des Betriebs. Darüber hinaus ergibt sich speziell bei einem zweistufigen Seitenkanalverdichter als Gasverdichter 14 ein optimales Verhältnis von geförderter Gasmenge und erreichter Druckerhöhung, wenngleich auch ein einstufiger Seitenkanalverdichter für einzelne Anwendungsfälle ausreichend sein kann.

Die Darstellung in Figur 4 zeigt in schematisch vereinfachter Form eine Übersichtsdarstellung eines Anwendungsszenarios der hier beschriebenen Strömungsverdichtereinheit 10. Danach ist die Strömungsverdichtereinheit 10, von der hier der Inverter 34, der Elektromotor 18 und der Gasverdichter 14 gezeigt sind, einem Partikelfilter 48 in Form eines Rußpartikelfilters (RPF) oder Dieselpartikelfilters (DPF) parallel zum eigentlichen Abgassystem vorgeschaltet. Die Strömungsverdichtereinheit 10 fördert mit einem Brenner 50 (Regenerationsbrenner) aufgeheizte Heißluft zum Partikelfilter 48. Ein aufgrund des am Luftanschlußstutzen 16 des Gasverdichters 14 austretenden Luftstroms und dessen Aufheizung durch den Brenner 50 resultierender Luftstrom 52 gelangt parallel mit einem Abgasstrom 54 von einem Verbrennungsmotor 56, insbesondere einem Dieselmotor, zum Partikelfilter 48.

Im Betrieb des in Figur 4 gezeigten Systems, also bei aktivem Verbrennungsmotor 56, muss der Gasverdichter 14 eine solche Gasmenge fördern - bei üblicherweise vom Gasverdichter 14 angesaugter Umgebungsluft eine solche Luftmenge - und einen solchen Druck aufbauen, dass die Abgase aus dem Abgasstrom 54 nicht zum Brenner 50 gelangen können. Demnach ist, wenn der Verbrennungsmotor 56 im Leerlauf läuft, ein geringerer Luftstrom 52 erforderlich, als wenn der Verbrennungsmotor 56 unter Volllast läuft. Unabhängig davon muss der Brenner 50 ständig gekühlt und gespült werden, um ein Verrußen und Überhitzen des Brenners 50 zu verhindern. Im Betrieb des Systems ist daher ein Dauerbetrieb der Strömungsverdichtereinheit 10 erforderlich, damit kontinuierlich zumindest eine minimale Luftmenge zum Brenner 50 gelangt und damit ein Verrußen und Überhitzen des Brenners 50 vermieden wird. Für einen solchen Dauerbetrieb der Strömungsverdichtereinheit 10 ist vorteilhaft, dass der den Gasverdichter 14 antreibende Elektromotor 18 ein bürstenloser Motor ist, der für einen Dauerbetrieb geeignet ist.

Im Betrieb des in Figur 4 gezeigten Systems wird permanent oder zyklisch zumindest ein Messwert zum Abgasstrom 54 erfasst, zum Beispiel eine Durchflussmenge oder eine Strömungsgeschwindigkeit. Anhand des oder jedes derartigen Messwerts erfolgt eine geregelte Ansteuerung des Inverters 34, derart, dass der Luftstrom 52 dem Abgasstrom 54 folgt, sich also bei erhöhtem Abgasstrom 54 auch ein entsprechend erhöhter Luftstrom 52 ergibt. Dies erfolgt, indem mittels der bereits erwähnten Ansteuerschaltung auf Basis zumindest eines derartigen Messwerts eine entsprechende Ansteuerung des Inverters 34 erfolgt. Diese Ansteuerung des Inverters 34 gibt die vom Inverter 34 erzeugte Wechselspannung nach Frequenz und Amplitude vor. Die resultierende Frequenz beeinflusst unmittelbar die Drehgeschwindigkeit des Elektromotors 18 und damit die mittels der Strömungsverdichtereinheit 10 geförderte Luftmenge.

Unabhängig davon wird auch am Eingang des Partikelfilters 48 oder am Ausgang des Partikelfilters 48 zumindest ein Messwert aufgenommen und bei erhöhtem

Staudruck am Eingang des Partikelfilters 48 die von der Strömungsverdichtereinheit 10 und dessen Gasverdichter 14 bereitgestellte Luftmenge unter gleichzeitiger Ansteuerung des Brenners 50 zur Erhöhung oder Senkung von dessen Heizleistung erhöht oder gesenkt. Auch dies erfolgt mittels der oben genannten Ansteuerschaltung. Auf diese Weise wird in an sich bekannter Art und Weise eine thermische Regeneration des Partikelfilters 48 bewirkt. Auch in dieser Hinsicht erfolgt eine geregelte Ansteuerung des Inverters 34 derart, dass die Strömungsverdichtereinheit 10 die zur thermischen Regeneration des Partikelfilters 48 notwendige Luftmenge bereitstellt. Die Verwendung des Inverters 34 zur Ansteuerung des Elektromotors 18 und damit zur mittelbaren Ansteuerung des von der Strömungsverdichtereinheit 10 umfassten Gasverdichters 14 erlaubt also dessen geregelten Betrieb und damit eine bedarfsgerechte Reaktion auf die Betriebszustände des Verbrennungsmotors 56 und/oder dessen Partikelfilter 48.

Einer der wesentlichen Vorteile der Strömungsverdichtereinheit 10 besteht im Vergleich zu mechanischen Verdichterantrieben, also einem Antrieb des Gasverdichters 14 direkt durch den jeweiligen Verbrennungsmotor, in der einfachen Möglichkeit zur Integration in bestehende Fahrzeuge/Anwendungen. Diese einfache Integration ergibt sich speziell aufgrund der Möglichkeit zur Nutzung des Bordnetzes und der davon umfassten Energiequelle 46 (Batterie). Schließlich ergibt sich auch eine hohe Leistungsfähigkeit, so dass die hier beschriebene Strömungsverdichtereinheit 10 je nach Leistungsgrenze des Versorgungsnetzes für bis 100 kW Feuerleistung des Brenners 50 und auch über 100 kW Feuerleistung des Brenners 50 nutzbar ist. Dadurch ist die Strömungsverdichtereinheit 10 als Luftversorgung für einen nachrüstbaren Vollstrombrenner zur Regeneration von Rußpartikelfiltern 48 für Motorleistungen bis und über 300 kW im mobilen Bereich einsetzbar.

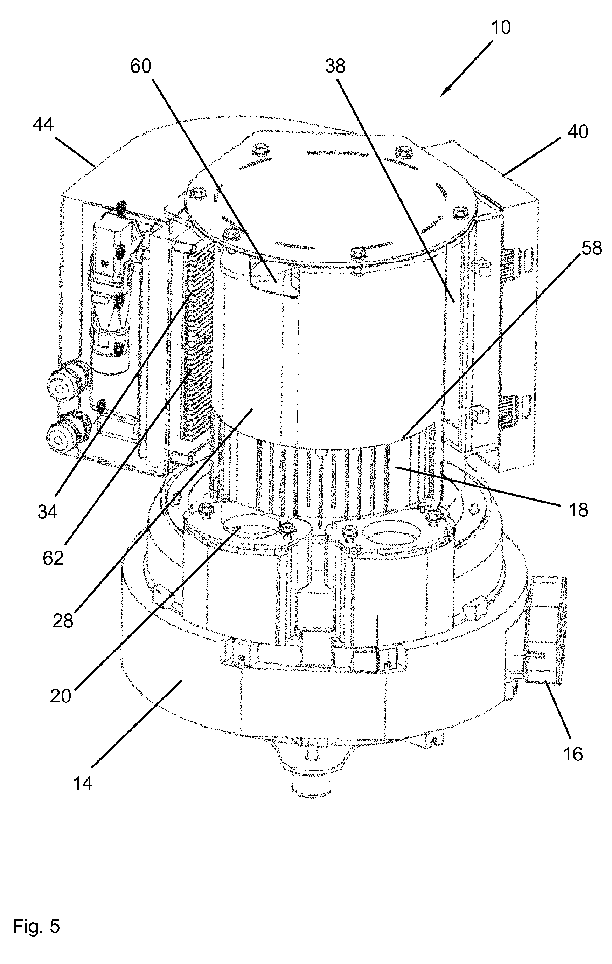

Die Darstellung in Figur 5 zeigt die Strömungsverdichtereinheit 10 aus Figur 1 mit einem teilweise entfernten Gehäuseaußenteil 26, so dass der Blick auf das im Gehäuseaußenteil 26 befindliche Gehäuseinnenteil 28 frei wird (nicht alle Einzelheiten aus Figur 1 und Figur 2 sind in Figur 5 und den nachfolgenden Figuren bezeichnet; insoweit wird auf die Darstellung in Figur 1 und Figur 2 verwiesen). Anhand der Kühlrippen ist auch ein Teil des im Gehäuseinnenteil 28 befindlichen Elektromotors 18 erkennbar. Der Blick auf den Elektromotor 18 ist möglich, weil das Gehäuseinnenteil 28 auf seiner zum Gasverdichter 14 gewandten Unterseite einen Ausschnitt aufweist, der als Fenster und im Folgenden zur Unterscheidung von einem weiteren Fenster im Gehäuseinnenteil 28 als erstes Fenster 58 bezeichnet wird. Das erste Fenster 58 weist eine Höhe von etwa einem Fünftel bis zu einem Viertel der Gesamthöhe des Gehäuseinnenteils 28 auf und erstreckt sich in Umfangsrichtung mit einer Bogenlänge von einem Viertel bis zu knapp unterhalb einer Hälfte des Umfangs des Gehäuseinnenteils 28. Neben diesem ersten Fenster 58 weist das Gehäuseinnenteil 28 noch das erwähnte weitere Fenster auf, das im Folgenden als zweites Fenster 60 bezeichnet wird. Das erste Fenster 58 ist in einer Unterkante des Gehäuseinnenteils 28 gebildet. Das zweite Fenster 60 ist in einer der Unterkante axial gegenüberliegenden Oberkante des Gehäuseinnenteils 28 gebildet, also in einer vom Gasverdichter 14 maximal entfernten Position. Auf die Funktion dieser beiden Fenster 58, 60 wird im Folgenden noch eingegangen. Einstweilen ist in Bezug auf die Darstellung in Figur 5 noch der Hinweis erforderlich, dass angesichts des teilweise entfernten Gehäuseaußenteils 26 der in die erste Öffnung 32 (Figur 2) eingesetzte Inverter 34 und der in die zweite Öffnung 36 (Figur 2) eingesetzte Luftfilter 38 erkennbar sind. Von dem Inverter 34 ist speziell der zum Innenraum des Gehäuseaußenteils 26 gewandte Kühlkörper 62 mit dessen Kühlrippen erkennbar. Die Kühlrippen verlaufen auf der ebenen Außenfläche des Inverters 34 in Umfangsrichtung des Gehäuseinnenteils 28. Bei der für die Darstellung in Figur 5 gewählten Blickrichtung ist noch der außerhalb des Gehäuseinnenteils 28 liegende Luftansaugstutzen 20 des Gasverdichters 14 erkennbar. Die neben diesem Luftansaugstutzen 20 gezeigte Einzelheit ist ein weiterer Auslass für den Gasverdichter 14, der bei der dargestellten Ausführungsform vorhanden ist, weil es sich bei dem Gasverdichter 14 um ein Großserienteil handelt. Für den Betrieb der Strömungsverdichtereinheit 10 ist diese Öffnung verschlossen. Entsprechend ist eine solche Öffnung für die Funktion der Strömungsverdichtereinheit 10 nicht notwendig und ist in den Darstellungen weder bezeichnet noch ergibt sich im Weiteren eine Notwendigkeit, auf eine derartige Öffnung einzugehen.

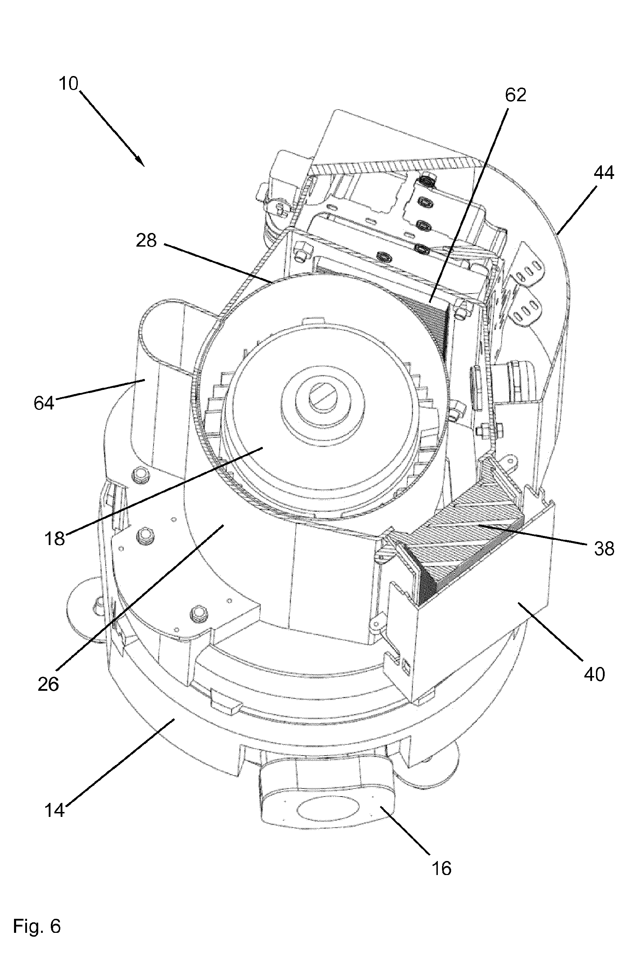

Die Darstellung in Figur 6 zeigt einen Schnitt durch die Strömungsverdichtereinheit 10 aus einer im Vergleich zu der Darstellung in Figur 5 anderen Perspektive. Aufgrund der für die Darstellung in Figur 6 gewählten Schnittebene sind der Deckabschnitt des Gehäuseinnenteils 28 und auch das flanschartige Ende des Gehäuseaußenteils 26 nicht gezeigt. Dies ermöglicht einen Blick in das Gehäuseinnenteil 28 und auf den im Gehäuseinnenteil 28 befindlichen Elektromotor 18. Der Kühlkörper 62 und der Luftfilter 38 sind durch die erste bzw. zweite Öffnung 32, 36 (Figur 2) an das Volumen zwischen Gehäuseaußenteil 26 und Gehäuseinnenteil 28 gekoppelt. In diesem Volumen wird beim Betrieb der Strömungsverdichtereinheit 10 ein vom Luftfilter 38 ausgehender Luftstrom geführt, der den Kühlkörper 62 passiert und damit zur Kühlung (Entwärmung) des Inverters 34 wirksam ist. Dies wird weiter unten mit weiteren Details beschrieben. Um einen solchen Luftstrom zu erreichen, ist an der Außenseite des Gehäuseaußenteils 26 in axialer Richtung ein Luftkanal 64 vorgesehen. Dieser verbindet den in der Darstellung in Figur 6 nicht mehr sichtbaren Luftansaugstutzen 20 (Figur 5) des Gasverdichters 14 mit dem zweiten Fenster 60 (Figur 5) im Gehäuseinnenteil 28. In der Darstellung in Figur 6 ist auch erkennbar, dass die Öffnung neben dem Luftansaugstutzen 20 (vgl. Beschreibung zu Figur 5) verschlossen ist. In Bezug auf die den Luftfilter 38 abdeckende Luftfilterhaube 40 ist bei der Darstellung in Figur 6 besonders gut zu erkennen, dass diese die Oberfläche des Luftfilters 38 vollständig abdeckt und damit als Spritzwasserschutz wirksam ist. Die Luftfilterhaube 40 ist dabei so dimensioniert, dass sie über die Fläche des Luftfilters 38 und den im Anschluss an die zweite Öffnung 36 (Figur 2) gebildeten Rahmen zur Aufnahme des Luftfilters 38 hinausreicht. Beim Betrieb der Strömungsverdichtereinheit 10 tritt der Luftstrom an den Spalten zwischen der Innenseite der Luftfilterhaube 40 und dem Rahmen des Luftfilters 38 ein.

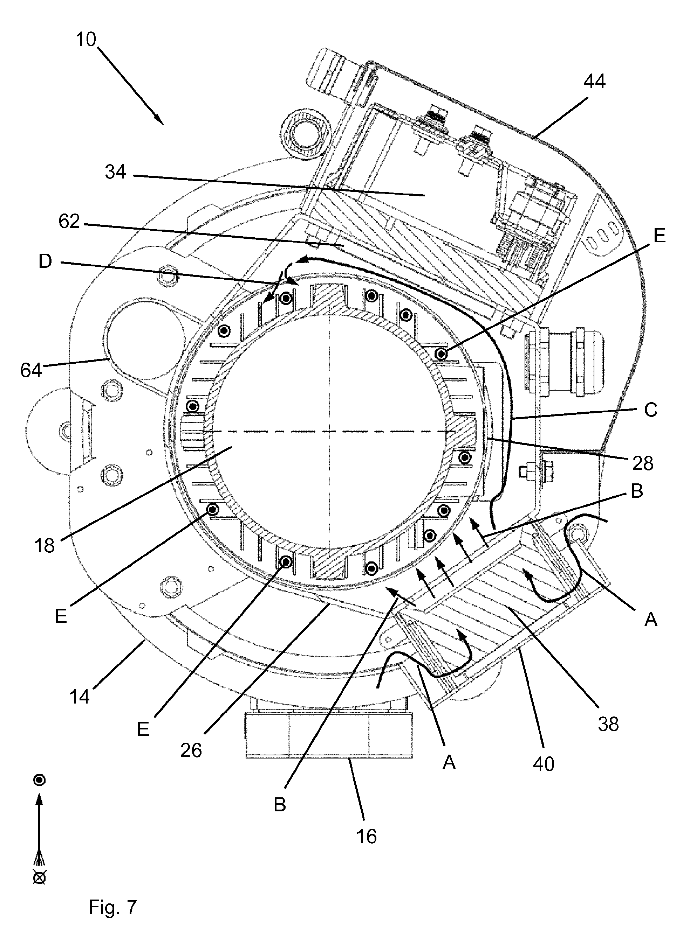

Die Darstellung in Figur 7 zeigt nunmehr eine geschnittene Ansicht der Strömungsverdichtereinheit 10 von oben mit einem durch Pfeile A, B, C, D, E verdeutlichten Weg eines Luftstroms, wie er sich beim Betrieb der Strömungsverdichtereinheit 10 innerhalb der Strömungsverdichtereinheit 10 ergibt.

Beim Betrieb der Strömungsverdichtereinheit 10 entsteht durch die Drehung des zumindest einen vom Gasverdichter 14 umfassten Lüfterrads ein Unterdruck. Dieser wird über den Luftansaugstutzen 20 (Figur 5), den daran anschließenden Luftkanal 64 und das zweite Fenster 60 (Figur 5) im Gehäuseinnenteil 28 in das Innenvolumen des Gehäuseinnenteils 28 weitergegeben. Das Volumen des Gehäuseinnenteils 28 ist über das erste Fenster 58 (Figur 5) im Gehäuseinnenteil 28 sowie einen an der Unterkante des Gehäuseinnenteils 28 freibleibenden Spalt an das Volumen des Gehäuseaußenteils 26 gekoppelt. Somit stellt sich der Unterdruck auch an der zweiten Öffnung 36 (Figur 2) im Gehäuseaußenteil 26 und an dem darin befindlichen Luftfilter 38 ein. Im Ergebnis strömt Umgebungsluft labyrinthisch um die äußeren Kanten der Luftfilterhaube 40 und den im Gehäuseaußenteil 26 gebildeten Rahmen für den Luftfilter 38 in die Strömungsverdichtereinheit 10 ein und strömt durch den Luftfilter 38 in das Innere des Gehäuseaußenteils 26. Die zur Veranschaulichung dieser Luftströmung in der Darstellung in Figur 7 eingezeichneten Pfeile sind dort mit den Buchstaben A und B bezeichnet.

Die Luftströmung kann sich im Innern des Gehäuseaußenteils 26, also zwischen Gehäuseaußenteil 26 und Gehäuseinnenteil 28, größtenteils nur in Richtung auf den Kühlkörper 62 ausbilden. Bei der Darstellung in Figur 7 ist dies eine Strömungsrichtung gegen den Uhrzeigersinn. Der zur Veranschaulichung dieser Luftströmung eingezeichnete Pfeil ist in Figur 7 mit dem Buchstaben C bezeichnet. Der Grund, dass sich die Luftströmung nur in genau einer Richtung ausbilden kann, liegt darin, dass bei der hier gezeigten Ausführungsform der Strömungsverdichtereinheit 10 das Gehäuseaußenteil 26 in Bezug auf das Gehäuseinnenteil 28 exzentrisch angeordnet ist und dementsprechend in dem Bereich, in dem keine Luftströmung gewünscht ist, die Außenoberfläche des Gehäuseinnenteils 28 an der Innenoberfläche des Gehäuseaußenteils 26 anliegt oder zumindest nahezu anliegt. Der Ausdruck "exzentrisch" meint dabei dass die Flächenschwerpunkte einer Schnittkontur des teilweise runden und teilweise polygonalen Gehäuseaußenteils 26 und des runden Gehäuseinnenteils 28 nicht zusammenfallen. Dabei ist ein Hauptdurchmesserkreis beider Gehäuseteile 26, 28 im Wesentlichen gleich und die Gehäuseteile 26, 28 sind abschnittsweise flächenbündig angeordnet. Die exzentrische Anordnung der beiden Gehäuseteile 26, 28 und die nur abschnittsweise Berührung oder näherungsweise Berührung der beiden Gehäuseteile 26, 28 lässt also in dem Volumen zwischen Gehäuseaußenteil 26 und Gehäuseinnenteil 28 zwischen einem Einlass in dieses Volumen (Luftfilter 38) und einem Auslass aus diesem Volumen (erstes Fenster 58) genau einen Weg um das Gehäuseinnenteil 28 zu und definiert damit eine eindeutige Strömungsrichtung.

Der auf diese Weise erreichte Strömungsweg führt in jedem Fall entlang des Kühlkörpers 62 und die angesaugte Umgebungsluft überstreicht die von dem Kühlkörper 62 umfassten Kühlrippen. Weil die Kühlrippen in Umfangsrichtung des Gehäuseinnenteils 28 (also quer zur Längsachse des Gehäuseinnenteils 28 oder quer zur Längsachse des Elektromotors 18) und damit in Strömungsrichtung orientiert sind, verläuft die Luftströmung auch zwischen den Kühlrippen und erfasst damit die gesamte Oberfläche des Kühlkörpers 62. Auf diese Weise wird eine wirksame Entwärmung des Kühlkörpers 62 und damit eine Entwärmung des Inverters 34 insgesamt erreicht. Erkennbar ist auch, dass das Gehäuseaußenteil 26 so geformt ist, dass sich im Volumen zwischen Gehäuseaußenteil 26 und Gehäuseinnenteil 28 im Bereich des Kühlkörpers 62 eine Einschnürung ergibt. Dies führt zu einer lokalen Erhöhung der Strömungsgeschwindigkeit. Vor allem führt dies aber dazu, dass eine definierte angesaugte Luftmenge, nämlich nahezu die gesamte über diesen Weg angesaugte Luftmenge, über und durch die Kühlrippen des Kühlkörpers 62 streicht, so dass die angestrebte Entwärmung des Kühlkörpers 62 in besonders hohem Maße gelingt.

Stromabwärts des Kühlkörpers 62 gelangt die angesaugte Umgebungsluft durch das erste Fenster 58 (Figur 5) in das Innere des Gehäuseinnenteils 28. Die zur Veranschaulichung dieser Luftströmung eingezeichneten Pfeile sind in der Darstellung in Figur 7 mit dem Buchstaben D bezeichnet. Von hier aus strömt die angesaugte Umgebungsluft in axialer Richtung des Elektromotors 18 im Gehäuseinnenteil 28 nach oben, nämlich zum zweiten Fenster 60 (Figur 5) im Gehäuseinnenteil 28, und zum daran anschließenden Luftkanal 64. Die angesaugte Umgebungsluft passiert dabei die Kühlrippen des Elektromotors 18 und ist damit auch zur Entwärmung des Elektromotors 18 wirksam. Weil an der Unterkante des Gehäuseinnenteils 28 ein umlaufender Spalt verbleibt, kann die angesaugte Luft auch entlang des kompletten, in dem Volumen zwischen Gehäuseinnenteil 28 und Gehäuseaußenteil 26 gebildeten Strömungswegs in das Innere des Gehäuseinnenteils 28 eintreten, so dass die Kühlrippen des Elektromotors 18 nicht nur im Bereich des ersten Fensters 58, sondern im Wesentlichen entlang des gesamten Außenumfangs des Elektromotors 18 mittels der angesaugten Umgebungsluft entwärmt werden. Die zur Veranschaulichung dieser Luftströmung eingezeichneten Symbole (siehe graphische Erläuterung links unten in der Darstellung in Figur 7) sind mit dem Buchstaben E bezeichnet. Die gewählte Symbolik soll veranschaulichen, dass die Luftströmung aus der Ebene der Darstellung hinaus in Richtung auf den Betrachter verläuft. Der umlaufende Spalt verbleibt deshalb an der Unterkante des Gehäuseinnenteils 28, weil das Gehäuseinnenteil 28 (siehe Figur 2) auf das Gehäuseaußenteil 26 aufgesetzt und das Gehäuseaußenteil 26 mit dem Gasverdichter 14 verbunden wird. Dadurch, dass eine Höhe des Gehäuseinnenteils 28 geringer, nämlich nur geringfügig geringer, als die Höhe des Gehäuseaußenteils 26 ist, hängt das Gehäuseinnenteil 28 quasi am Gehäuseaußenteil 26 und es ergibt sich der umlaufende Spalt an der Unterkante des Gehäuseinnenteils 28.

Die angesaugte Umgebungsluft wird also gleichzeitig zur Kühlung des Kühlkörpers 62 und zur Kühlung des Elektromotors 18 verwendet. Die gleichzeitige Kühlung beider Einheiten ist möglich, weil am Kühlkörper 62 eine Verlustleistung in der Größenordnung von 40 W entsteht und sich dieser im Betrieb der Strömungsverdichtereinheit 10 auf Temperaturen bis zu ca. 60-65 C erwärmt. Demgegenüber entsteht am Elektromotor 18 Verlustleistung in der Größenordnung von 400 W und der Elektromotor 18 erwärmt sich im Betrieb der Strömungsverdichtereinheit 10 auf Temperaturen bis zu ca. 120°C.

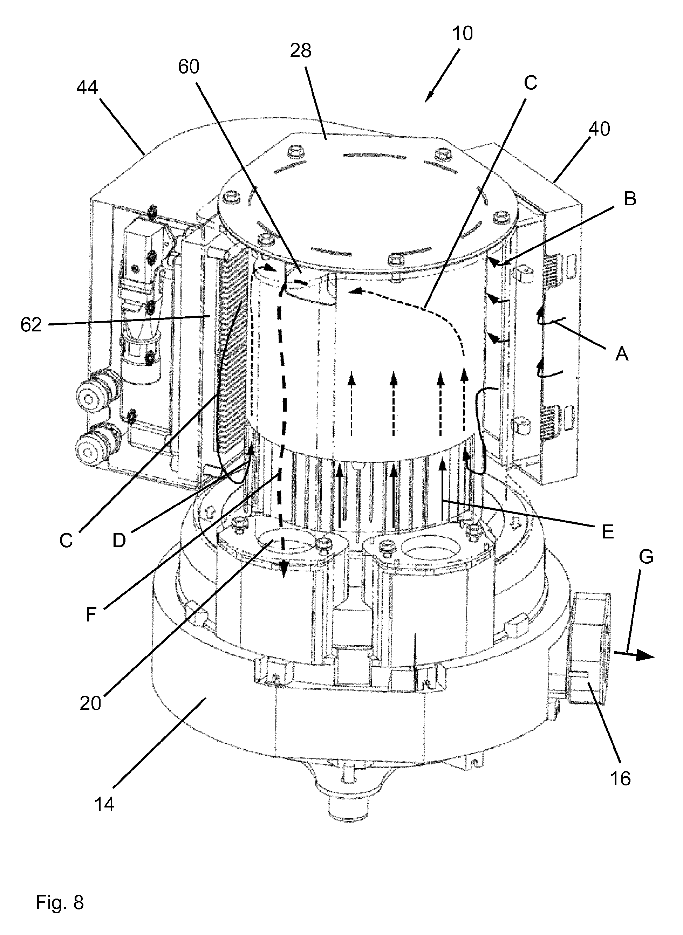

Die Darstellung in Figur 8 zeigt die Strömungsverdichtereinheit 10 in einer Ansicht wie in Figur 5, so dass auf die dortige Erläuterung verwiesen werden kann. Um die Übersicht über die Darstellung in Figur 8 nicht unnötig zu erschweren, sind nicht alle Bezugszeichen eingezeichnet. Auch insoweit wird auf die Darstellung in Figur 5 verwiesen. Eingezeichnet ist in Figur 8 der Weg der angesaugten Umgebungsluft innerhalb der Strömungsverdichtereinheit 10 und zur Bezeichnung der so veranschaulichten Strömungsrichtungen sind auch in Figur 8 die bereits bei der Erläuterung der Darstellung in Figur 7 verwendeten Buchstaben eingetragen. Zusätzlich ist noch der Strömungsweg aus dem Innern des Gehäuseinnenteils 28 über das zweite Fenster 60 und den in Figur 8 nicht gezeigten Luftkanal 64 (Figuren 6, 7) in den Luftansaugstutzen 20 gezeigt. Dieser Strömungsweg ist mit dem Buchstaben F bezeichnet. Die verdichtete angesaugte Umgebungsluft verlässt den Gasverdichter 14 über dessen Luftanschlußstutzen 16 (Buchstabe G) und gelangt von dort aus zum Brenner 50 (Figur 4).

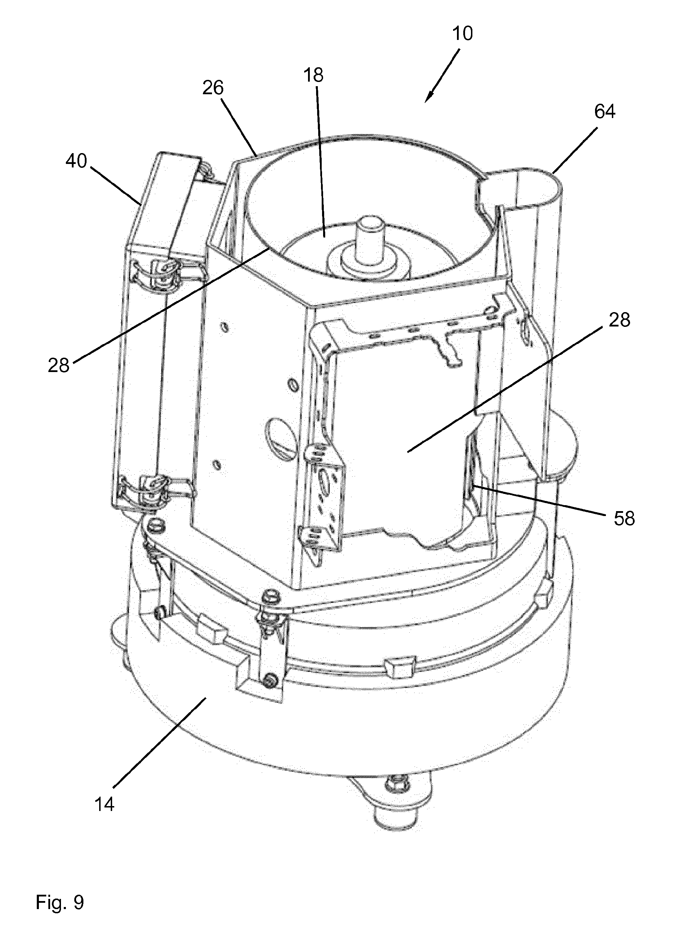

Die Darstellung in Figur 9 zeigt abschließend, dass das erste Fenster 58 im Gehäuseinnenteil 28 nur teilweise vom Gehäuseaußenteil 26 abgedeckt ist. Das erste Fenster 58 ist also als Eintrittsöffnung in das Gehäuseinnenteil 28 wirksam. Bei der Darstellung in Figur 9 sind die Inverterabdeckhaube 44 und der normalerweise in der ersten Öffnung 32 (Figur 2) angebrachte Inverter (Umrichter) 34 entfernt, so dass der Blick in das Innere des Gehäuseaußenteils 26 auf die Oberfläche des Gehäuseinnenteils 28 und den als Strömungsöffnung zugänglichen Abschnitt des ersten Fensters 58 frei wird. Die Fortsetzung des ersten Fensters 58 bis in den Bereich, der durch das Gehäuseaußenteil 26 abgedeckt wird, fungiert dabei als Kanal zusätzliche Kanal für die angesaugte Umgebungsluft, so dass diese auch in diesem Bereich über die Kühlrippen des Elektromotors 18 streich und damit zu einer gleichmäßigen Entwärmung des Elektromotors wirksam ist.

Einzelne im Vordergrund stehende Aspekte der hier eingereichten Beschreibung lassen sich damit kurz wie folgt zusammenfassen: Angegeben werden eine Strömungsverdichtereinheit 10 und eine Verwendung einer Strömungsverdichtereinheit 10, wobei die Strömungsverdichtereinheit 10 einen Gasverdichter 14 sowie einen Elektromotor 18 zum Antrieb des Gasverdichters 14 und einen Inverter 34 zur Speisung des Elektromotors 18 umfasst und sich dadurch auszeichnet, dass ein Gehäuse 26, 28, insbesondere ein Gehäuse 26, 28 mit integriertem Luftfilter 38, einen Strömungsweg für ein im Betrieb der Strömungsverdichtereinheit 10 mittels des Gasverdichters 14 angesaugtes Medium definiert und dass der Strömungsweg entlang einer Oberfläche des Inverters 34 und/oder entlang der Außenoberfläche des Elektromotors 18 verläuft, so dass das angesaugte Medium zur Kühlung des Inverters 34 und zur anschließenden Kühlung des Elektromotors 18 oder entweder zur Kühlung des Inverters 34 oder zur Kühlung des Elektromotors 18 wirksam ist. Die Strömungsverdichtereinheit 10 kommt speziell zur Verwendung bei der Verbrennungsluftversorgung eines Brennersystems, insbesondere eines als Regenerationsbrenner 50 zur Regeneration eines Rußpartikelfilters 48 oder dergleichen fungierenden Brennersystems, in Betracht. Weitere Anwendungsfälle sind eine mobile Prozesslufterzeugung oder ein aktives Thermomanagement von Abgasnachbehandlungssystemen. Des Weiteren kommt die Strömungsverdichtereinheit 10 auch zur Prozesslufterzeugung in sogenannten airassisted SCR-Systemen (SCR = selektive katalytische Reduktion) in Betracht, bei denen zur Entstickung von Abgasen eine Harnstofflösung durch die Vermischung mit dem Luftstrom des Gasverdichters 14 und Zerstäubung in einer 2-Stoffdüse in das Abgas eingebracht wird..

Der hier beschriebene Ansatz der Speisung des zum Antrieb des Gasverdichters 14 vorgesehenen Elektromotors 18 durch einen Inverter 34 kommt speziell auch für sogenannte Non-Road Applikationen und industrielle Applikationen in Betracht. Ein weiterer Anwendungsfall ist die Erzeugung von Vakuum, speziell die mobile Erzeugung von Vakuum. Eine solche mobile Vakuumerzeugung ist sinnvoll zum Beispiel bei von Lastkraftwagen oder dergleichen mitgeführten, an sich bekannten Ladeeinrichtungen für zum Beispiel Glasscheiben, sonstige flächige Elemente und Gegenstände mit zumindest einer ebenen Oberfläche (Vakuumhandhabungssysteme). Der hier beschriebene Ansatz ist unmittelbar auch zur Vakuumerzeugung verwendbar. Im Vergleich zu einer Anwendung als Gasverdichter werden lediglich Ein- und Auslass des Gasverdichters 14, zum Beispiel eines Seitenkanalverdichters, vertauscht.

### Bezugszeichenliste

- 10: Strömungsverdichtereinheit
- 12: Antriebsteil
- 14: Gasverdichter
- 16: Luftanschlußstutzen (des Gasverdichters)
- 18: Elektromotor / Kleinspannungs-Asynchronmotor
- 20: Luftansaugstutzen (des Gasverdichters)
- 22: Fußständer
- 24: Schwingungsdämpfer
- 26: Gehäuseaußenteil
- 28: Gehäuseinnenteil
- 30: Dichtung (zwischen Gehäuseaußen- und Gehäuseinnenteil)
- 32: erste Öffnung (im Gehäuseaußenteil)
- 34: Inverter
- 36: zweite Öffnung (im Gehäuseaußenteil)
- 38: Luftfilter
- 40: Luftfilterhaube
- 42: Dichtung (zwischen Inverter und Gehäuseaußenteil)
- 44: Inverterabdeckhaube
- 46: elektrische Energiequelle / Batterie
- 48: Rußpartikelfilter / Partikelfilter
- 50: Brenner / Regenerationsbrenner
- 52: Luftstrom (vom Brenner)
- 54: Abgasstrom
- 56: Verbrennungsmotor
- 58: erstes Fenster (im Gehäuseinnenteil)
- 60: zweites Fenster (im Gehäuseinnenteil)
- 62: Kühlkörper
- 64: Luftkanal

## Patentansprüche

1. Strömungsverdichtereinheit (10) mit einem Gasverdichter (14) sowie einem Elektromotor (18) zum Antrieb des Gasverdichters (14) und einem Inverter (34) zur Speisung des Elektromotors (18),
wobei der Elektromotor (18) von einem Gehäuse (26, 28) umgeben ist,
wobei das Gehäuse (26, 28) einen Strömungsweg für im Betrieb der Strömungsverdichtereinheit (10) vom Gasverdichter (14) angesaugte Umgebungsluft definiert und
wobei der Inverter (34) so mit dem Gehäuse (26, 28) kombiniert ist, dass eine Oberfläche des Inverters (34) als Begrenzungsfläche des Strömungswegs im Gehäuse (26, 28) fungiert.

2. Strömungsverdichtereinheit (10) nach Anspruch 1, mit einem aus einem Gehäuseaußenteil (26) und einem Gehäuseinnenteil (28) gebildeten Gehäuse, wobei das Volumen zwischen dem Gehäuseaußenteil (26) und dem Gehäuseinnenteil (28) den Strömungsweg für im Betrieb der Strömungsverdichtereinheit (10) vom Gasverdichter (14) angesaugte Umgebungsluft definiert und wobei das Gehäuseaußenteil (26) eine Öffnung (32) zum Einsetzen des Inverters (34) in das Gehäuseaußenteil (26) aufweist.

3. Strömungsverdichtereinheit (10) nach Anspruch 1 oder 2, wobei das Gehäuseaußenteil (26) so geformt ist, dass sich im Volumen zwischen Gehäuseaußenteil (26) und Gehäuseinnenteil (28) im Bereich der als Begrenzungsfläche des Strömungswegs fungierenden Oberfläche des Inverters (34) eine Einschnürung des Luftwegs ergibt.

4. Strömungsverdichtereinheit (10) nach Anspruch 2 oder 3, mit einem in Bezug auf das Gehäuseinnenteil (28) exzentrisch angeordneten Gehäuseaußenteil (26), wobei eine Innenoberfläche des Gehäuseaußenteils (26) abschnittsweise eine Außenoberfläche des Gehäuseinnenteils (28) berührt oder näherungsweise berührt.

5. Strömungsverdichtereinheit (10) nach einem der Ansprüche 2, 3 oder 4, wobei das Gehäuseinnenteil (28) an axial gegenüberliegenden Enden ein erstes und ein zweites Fenster (58, 60) aufweist.

6. Strömungsverdichtereinheit (10) nach Anspruch 5, wobei an einer Unterkante des Gehäuseinnenteils (28) ein umlaufender Spalt bleibt, der das Volumen zwischen dem Gehäuseaußenteil (26) und dem Gehäuseinnenteil (28) an das Volumen im Gehäuseinnenteil (28) koppelt.

7. Strömungsverdichtereinheit (10) nach Anspruch 5 oder 6, wobei das Innenvolumen des Gehäuseinnenteils (28) auf eine Hüllkontur des Elektromotors (18) abgestimmt ist.

8. Strömungsverdichtereinheit (10) nach einem der Ansprüche 2 bis 7, wobei das Gehäuseaußenteil (26) eine Öffnung (36) zum Einsetzen eines Luftfilters (38) in das Gehäuseaußenteil (26) aufweist.

9. Strömungsverdichtereinheit (10) nach Anspruch 8, wobei der in das Gehäuseaußenteil (26) eingesetzte Luftfilter (38) mit einer Luftfilterhaube (40) abgedeckt ist und wobei die Luftfilterhaube (40) durch ihre Formgebung als Spritzschutz für den Luftfilter (38) fungiert.

10. Strömungsverdichtereinheit (10) nach einem der vorangehenden Ansprüche, mit einem Elektromotor (18) in Form eines Kleinspannungs-Asynchronmotors, der über einen Inverter (34) aus einer Gleichspannungsquelle, insbesondere einer Batterie (46), insbesondere einer von einem Fahrzeug mitgeführten Batterie (46), zum Antrieb des Gasverdichters (14) mit elektrischer Energie versorgt wird.

11. Strömungsverdichtereinheit (10) nach Anspruch 10, wobei der Inverter (34) für eine Eingangsspannung von 9 bis 30 V Gleichspannung, insbesondere für eine Eingangsspannung von 12 V Gleichspannung oder für eine Eingangsspannung von 24 V Gleichspannung, und zur Erzeugung einer Ausgangsspannung von 6 bis 20 V Wechselspannung bei Frequenzen von 0 Hz bis 300 Hz ausgelegt ist.

12. Strömungsverdichtereinheit (10) nach Anspruch 10 oder 11, wobei der Kleinspannungs-Asynchronmotor (18) ein herkömmlicher Dreiphasen- Asynchronmotor zur Speisung mit 230 V Wechselspannung ist, der durch Neuwicklung seiner Ständerwicklungen für einen Betrieb durch die von dem Inverter (34) gelieferte Ausgangsspannung angepasst ist.

13. Strömungsverdichtereinheit (10) nach einem der vorangehenden Ansprüche mit einem Seitenkanalverdichter, insbesondere einem zweistufigen Seitenkanalverdichter, als Gasverdichter (14).

14. Verwendung einer Strömungsverdichtereinheit (10) nach einem der vorangehenden Ansprüche als Luftversorgung für einen Vollstrombrenner zur Regeneration eines Rußpartikelfilters (48).
